(19) **Europäisches Patentamt**
**European Patent Office**
**Office européen des brevets**

(11) **EP 3 511 788 B1**

(12) **EUROPEAN PATENT SPECIFICATION**

(45) Date of publication and mention
of the grant of the patent:
**10.08.2022 Bulletin 2022/32**

(51) International Patent Classification (IPC):
**G05B 19/4065** (2006.01) **G05B 23/02** (2006.01)

(21) Application number: **18151426.6**

(52) Cooperative Patent Classification (CPC):
**G05B 19/4065; G05B 23/0237**

(22) Date of filing: **12.01.2018**

(54) **MONITORING INDUSTRY PROCESS DATA**

ÜBERWACHUNG VON INDUSTRIEPROZESSDATEN

SURVEILLANCE DE DONNÉES DE PROCESSUS INDUSTRIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.07.2019 Bulletin 2019/29**

(73) Proprietor: **Siemens Aktiengesellschaft
80333 München (DE)**

(72) Inventors:
• **Brikis, Georgia Olympia
80805 München (DE)**
• **Huang, Yi
85570 Markt Schwaben (DE)**
• **Roshchin, Mikhail
81925 München (DE)**
• **Thon, Ingo
81541 Muenchen (DE)**
• **Batsiukov, Kiryl
81379 München (DE)**
• **Müller, Martin C
81379 München (DE)**

(56) References cited:
**EP-A2- 0 971 321 US-A1- 2007 143 038
US-A1- 2012 271 587 US-A1- 2013 205 014**

**Description**

An industrial application comprises a machine performing a predetermined task. The machine may for instance be relatively simple like an electric motor, a valve or an electric magnet. In a more complex example, the machine may comprise an injection moulding press, an industrial robot or a bottling plant. The machine may be composed of an arrangement of other machines and several machines may work together to form a system. In order to control the operation of the overall machine or system it is often necessary to control several of its parts. This may be true for machine operation as well as for securing machine availability. To this end, machine data related to the process may be collected and processed.

An industrial machine may be equipped with one or more contraptions that pick up at least one operational parameter regularly or on an event driven basis. The acquired data may be stored for a predetermined time and processing may take place on stored data. The number of data points taken on an industrial machine has increased lately and may exceed 200 even for a simpler machine like an electric motor, wherein each point represents one operation- or environment-related parameter of the motor. Given a good understanding of the machine, the acquired data may permit determination of complex parameters like a remaining machine life time.

The data picked up from more than one industrial machine may be put to more use through combined data analysis. By comparing performance of machines of similar or the same type employed for different purposes or in different environments, machine stress and component wear out may be analysed. Production data of one machine may be related to that of a different machine on the same plant. Complex and high level data analysis may lead to completely new insights and perspectives. US2007/0143038 and EP 0971 321 A2 discuss different approaches of analysing data utilizing clusters of data.

Disclosure of the Invention

The present invention is set out in the appended set of claims and concerns a method and a system for monitoring data of an industrial process. The method comprises steps of acquiring a parameter related to the industrial process; determining the distance of said acquisition to a cluster; and determining that said acquisition represents an anomaly if its distance to the cluster exceeds a predetermined threshold. In this, the cluster comprises at least a predetermined number of acquisitions that are closer to each other than a predetermined distance and the distance between the acquisition and the cluster is the shortest distance between said acquisition and any acquisition of the cluster. The process is controlled on the basis of whether or not an anomaly was detected.

The invention is based on the insight that it may not be necessary to formally define what "normal" behaviour of observed data is to detect an anomaly. Anomaly detection may instead identify data that differs from a majority of previous observations. This can be technically formulated through the concept of a cluster which represents an accumulation of acquisitions of said parameter. Should a large enough number of acquisitions lie closely enough together, an acquisition that lies farther apart may indicate an anomaly. This may allow anomaly detection solely on the basis of observation of acquisitions of said parameter. The method needs only three user supplied variables: the minimum number of acquisitions that make up a cluster, the maximum distance between acquisitions of the cluster and the distance between an acquisition and the cluster beyond which the acquisition is considered an outlier. In this, the two distances may be set to the same value.

It is preferred that the distance of said acquisition to the closest of a plurality of distinct clusters of previous acquisitions of said parameter is determined. This may allow for parameters that have more than one cluster. The acquisition will be considered not part of any cluster if it is further than predetermined apart from each of the clusters.

Said parameter may have n dimensions, with n > 1, and the distance between two acquisitions may be determined as the Euclidian distance in n-dimensional space. This may allow for multi-dimensional data, that is, a value that is dependent on one or more other value. There is no theoretical limit to the number of dimensions so that the given method may be applicable to complex circumstances. Other possible options for the distance include Tchebychev, Manhattan or Canberra.

The method may further comprise steps of determining the probability that the acquisition represents an anomaly; and of determining that said acquisition represents an anomaly if said probability exceeds a predetermined threshold. This way an acquisition that lies apart from all clusters may not necessarily lead to determination of an anomaly. Evaluation of the determined probability may be left to an external or supervising process, allowing for consideration of accompanying factors. Should it for instance be already known that wear out of an apparatus involved in the process, from which apparatus the parameter is acquired from, leads to shifting clusters, an outlier in direction of the wear out may be treated differently than in the opposite or an altogether different direction.

An event may be generated if an anomaly is detected. The event may be stored in storage for later processing. The event may comprise an indication of the determination result as well as the original acquisition or an intermediate result like the determined distance of the acquisition or to what acquisition the distance was determined.

A notification may be sent if an anomaly is detected. A process supervising, controlling or analysing said industrial process may thus be freed from permanently watching incoming acquisitions for outliers. This enables improved separation of supervision from recognition.

A subscription to a notification concerning an anomaly of said parameter may be received beforehand. The party from which the subscription is received may be called subscriber. A subscription may address a predetermined parameter or set of parameters. The subscription may be limited to a predetermined length of time, either from the subscriber's side or from the method's side. A subscription may be extended at said method. An unsubscription may also be possible.

It is preferred that communication with said method is done through a predetermined set of messages also known as application program interface (API). An event, notification or parameter acquisition may also be transferred over said API. A plurality of requests may be servable in parallel, enabling more than one supervising process to work on the same information. Different supervision tasks may be better separated from each other. The method may receive acquisitions a plurality of parameters and the parameters may stem from the same or several different industrial processes. Access control may be in place that separates one parameter or industrial process from another one or enables processing of acquisitions overarching several parameters or industrial processes, respectively.

The acquisition may be stored and stored acquisitions with a storing duration that exceeds a predetermined time may be deleted. Especially in time series acquisitions only such from a predetermined past may be minded while older acquisitions may be dropped. This way the clusters may be more dynamic and change shape or location in accordance with recent data. In an alternative embodiment of present invention a predetermined number of acquisitions is kept and if the number is exceeded the oldest acquisition with the longest storing time may be deleted. This variant may be more advantageous when information does not become apparent in a regular timely fashion.

A system for processing data concerning an industrial process comprises a computing platform, the computing platform having a data interface that is connectable, via a wide area data network, to a physical entity, wherein the physical entity is adapted to provide an acquisition of a parameter that is related to operation of a machine involved in said process and wherein the platform is adapted to carry out a method disclosed herein. The system may thus be used to detect an anomaly of one or more parameters that are related to the given industrial process. Optionally the parameters may relate to more than one industrial process and anomaly of compared, cooperating or competitive processes may be detected. The process may be controlled better on this basis. Advantages or features of the system or device may apply to the method and vice versa.

Brief Summary of the Enclosed Figures

The above-described properties, features and advantages of present invention as well as the way they are achieved will be made clearer and better understandable in the light of the following discussion, making reference to exemplary embodiments shown in accompanying figures, in which

Figure 1    shows data processing for one or more industrial systems;
Figure 2    shows a flow chart of an exemplary method for processing data of an industrial process;
Figure 3    shows an exemplary data flow; and

Figure 4    shows exemplary clustered data and outliers.

Detailed Exemplary Embodiments of the Invention

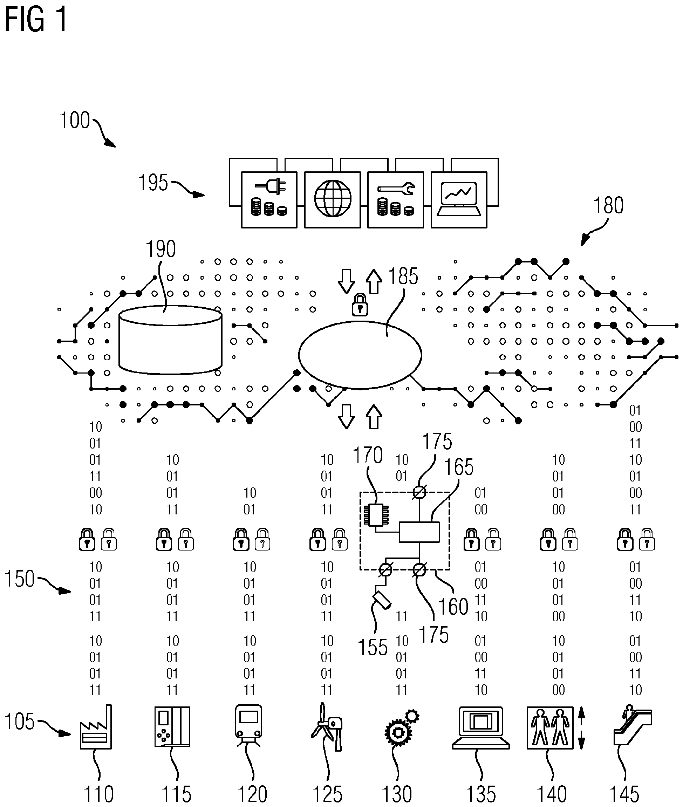

Figure 1 shows a system 100 for data processing for one or more industrial processes 105. Exemplary industrial processes 105 shown in the bottom section of Figure 1 include industrial processing 110, building technology 115, mobility 120, wind power 125, industrial drives 130, health care applications 135, an elevator 140 and an escalator 145. More possible processes 105 include smart city applications, energy management or digital factory. The given selection of industry processes 105 is exemplary and non-limiting. Also, process 105 classification is paradigmatic and a given industrial process 105 may comprise elements of more than one of the given processes 105.

Complexity of a process 105 and deviation of the process 105 from a general approach may differ greatly in different fields. While for instance variance between any two given escalator 145 processes may be limited, process variance in industrial processing 110 may be very high and depend on an object that is to be processed or manufactured. For managing the process 105, high level functionality like determination of expected machinery lifetime, cost factor estimation or supply chain management may require a data model for the process 105 or a class of services 105 the service 105 at hand is part of.

Each process 105 yields data 150 that describes the operation of a technical contraption like a machine, a system, a plant or a production system. Such data may comprise an item count, a speed of movement, acceleration, a temperature, a pressure, a force or torque, a current, a voltage, a distance or any other parameter that is related to the process 105 at hand. Some of the data 150 may already be available in the process 105 in digital form, for instance an ambient temperature that is measured by a different system or a rotational speed requirement. Other data 150 may be sampled with the help of a dedicated sensor 155 and/or a sampling unit 160. The sampling unit 160 may comprise a computational unit 165, local memory 170 and/or interfaces 175 to the contraption at hand, the sensor 155 or a remote data processing entity 180. It is preferred that the machine and/or the sampling unit 165 is adapted to exchange data 150 with the remote data processing entity 180 in encrypted form.

The sampling unit 160 may comprise a microcomputer or microcontroller adapted for digital data processing, especially in the form of the computational unit 165. A method for data processing disclosed herein may be available in form of a computer program product with program code means and the sampling unit 160 may be adapted to implement said method or a part of it by executing the program code means. The computer program product may be stored on a computer readable medium or be transferrable from one system to another by means of a wireless or wire bound data connection.

The processing entity 180 is preferred to implement a service 185 on any desired hardware, especially abstracted from the hardware as a cloud based service 185. This way, the physical location the service 185 is executed at and the physical resources allocated for the service 185 may vary transparently. This may allow for improved resource scaling or location based servicing. The processing entity 180 may comprise a computational unit 165 and/or other elements discussed above with respect to sampling unit 160.

In one preferred option, the service 185 is part of a data processing environment that provides certain functionality for data 150 acquisition, storage, processing or provisioning. A preferred processing environment is known under the name MindSphere. The processing environment may run on top of a cloud service such as AWS (Amazon Web Services) or any other data processing platform.

The service 185 is preferred to have available a storage 190 like a database or a computer file system, especially for data 150. The storage 190 may be implemented on any desired hardware, including semiconductor memory or rotating media magnetic data storage. The storage 190 may itself be implemented as a service, especially a cloud based service, so that from the service's 185 point of view physical constraints or features of the implementation of the storage 190 like maximum capacity or physical location of data holding medium are of no concern and may not even be available. The data 150 is generally time-related in that the reading of a parameter has an associated time which may comprise a date and/or a time. A series of data 150 points over time may form a data series. Information in the storage 190 may be processed, compressed, swapped or dropped after it has been held for longer than a predetermined time or when an available amount of information exceeds a predetermined threshold.

It is proposed to provide the service 185 such that a higher level process 195 may request data 150 and the process 195 returns the requested data 150 in processed or pre-processed form. Request and/or response may be encrypted and/or authenticated. Processing of data 150 may take place after the actual request or at an earlier time after the data 150 is made available. Processed or partly processed data 150 may be stored in storage 190. Data 150 is called raw when it is unaltered from the form it is received from a machine, process 105 or unit 160 by the service 185. Data 150 is called pre-processed after it is made better processable without changing its meaning or context. Pre-processing may for instance identify or remove outliers, mark or fill data gaps, identify or compensate measurement noise or bias. Pre-processing may perform statistical operations on the raw data 150. Data 150 is called processed after several parameters have been combined, deeper statistical analysis has been performed or an altogether new parameter is provided on the basis of existing raw or pre-processed data 150.

The service 185 is preferred to provide pre-processed data on a process 105 to a higher level process 195 via an application program interface (API). Raw and/or processed data 150 may also be made available. The higher level process 195 may not need to worry about basic data processing like data smoothing, outlier detection, noise reduction or key factor determination.

It is proposed that the processing offered by the service 185 will generally be on an abstraction layer that is higher than data sampling and relaying but lower than modelling the underlying industrial process 105. It is especially preferred that the process 195 makes sense of the data 150 in context with a given process 105, while pre-processing or processing of service 185 may be targeted at the data 150 itself, not paying heed to what meaning it carries inside the process 105. Processing of the process 195 may comprise any desired numerical, symbolic or other processing. In one option, the process 195 is designed to provide a visualisation of the data 150, especially for human reception.

In one figurative example an industrial process 105 at hand comprises the fabrication of wooden planks out of timber with a lumber mill with an oscillating saw. Raw data 150 may comprise an oscillation frequency of the saw, the length of wood that has been cut since the last sharpening of the saw blade and the amount of wood that needs to be cut until a predetermined date. The raw data 150 may be pre-processed to be for instance noise-reduced, smoothed or checked to lie within a predetermined range. The data 150 may be further processed to yield a key performance indicator like the lumber mill utilization in per cent. Other processing may comprise trend prediction, calculation of an indirect signal or anomaly detection.

The data 150 provided to the higher level process 195 may form an improved basis on which said process 195 may control the process 105, react on a predetermined condition, relate the process 105 to another process 105 or use external data to gain improved insight or control over the process 105. Such processing generally requires knowledge on the process 105 and its implications and is often done using a mathematical model for said process 105.

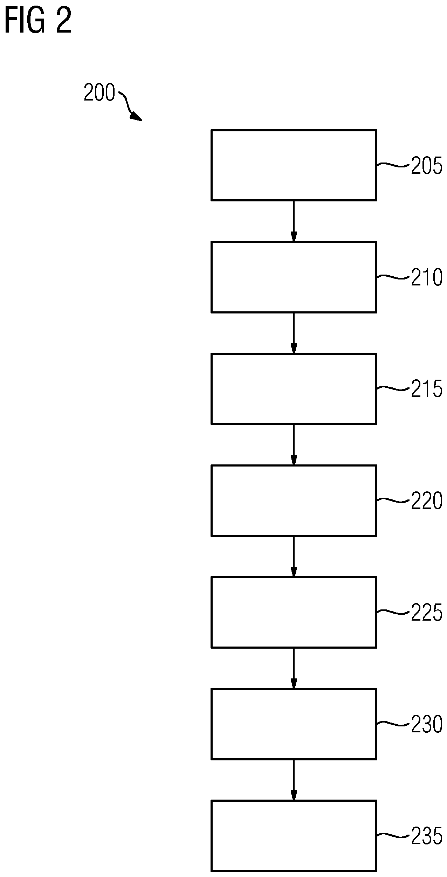

Figure 2 shows a flow chart of a method 200 for processing data concerning an industrial process 105. The method 200 is preferred to be adapted to run on a system 100 of the kind that is described with reference to Figure 1.

In a step 205, a parameter of a machine involved in the industrial process 105 may be acquired. Acquisition is generally the action of determining and/or providing an information or data 150, which is also called acquisition herein. The data 150 is preferred to comprise the value of a parameter, for instance a numerical value corresponding to a predetermined unit (like meters), expressing for example a distance. An indication of the time corresponding to the data 150, like the sampling time, may be processed alongside the acquired data 150.

Acquisition may comprise retrieving digital or analog data 150 that is available in the machine connected to the process 105 or a device controlling the process 105. The industrial process 105 may comprise manufacturing a product on a manufacturing line and acquiring may for example comprise requesting a machine parameter from a production line controller controlling at least one machine on the line and evaluating a response. Acquiring may also comprise taking a measurement through use of a sensor 155. The sensor 155 may for instance be adapted to measure an angle, a length, a count, a position, a movement, a speed, acceleration, a current, a voltage, a power, a force, an age or any other kind of measurable data 150. The measured parameters are preferred to stand in context with the process 105 and may for instance be part of a machine status or a processing status of an object that is being treated or manufactured. Acquisition may also comprise reading data 150 from a repository such as storage 190 or a log file.

Acquisition may be triggered by polling, i.e. an external acquisition request, by an event, e.g. the change of a signal or parameter related to the process 105, or based on time, e.g. after a predetermined time since the last acquisition. It is preferred that a plurality of acquisitions may take place simultaneously or in small enough a period of time that temporal correlation between the acquisitions exists. Acquired data 150 may be pre-processed locally by a processing unit that is located in the domain of the process 105, like the sampling unit 160, but it is preferred that raw data 150 is passed from step 205 and pre-processing takes place at a later step of method 200 and possibly in a different physical location, like the processing entity 180. Data 150 is preferred to be formatted in JavaScript Object Notation (JSON).

In a step 210 the data 150 is preferred to be encrypted and may then be sent to the processing entity 180. Physical location of the processing entity 180 may be dynamic and transparent to external processes so that transfer of the data 150 may require a dynamic routing protocol. In a step 215 the transferred data may be received by the processing entity 180 and decrypted if necessary.

The received data may then be stored in a step 220 for later retrieval and/or processing. It is preferred that the data 150 is stored in a storage 190 that is available to the processing entity 180 and to the service 185 running on top of it. Processing on stored data 150 may take place at a later point in time. Alternatively, processing may take place before storing. Mixed operation is also possible in which some processing is done independently of the data retrieval request and some is done in response to it. In an embodiment where processing is done on stored data 150, processing may be triggered by a data 150 retrieval request or on an automatic basis, for instance controlled by an event or regularly. The event may for instance comprise the availability of an acquisition of a predetermined parameter or the fulfilment of a predetermined condition during other processing, like the value of an acquired or processed parameter exceeding a threshold. Processing of an acquisition will be explained in more detail below with reference to step 230.

For storing and/or processing, data 150 from different processes 105 is preferred to be kept separate, for instance in different database tables and preferably with appropriate access control in place. The storage 190 may be multi-tier in that it comprises several stages of memory that vary in access time and capacity. Fresh data 150 is generally stored in fast but small memory (e.g. RAM) and older data 150 may eventually get relocated into the next slower and larger memory (e.g. a rotating magnetic medium memory, a rotating optical medium or a streaming medium like a magnetic tape).

In an optional step 225 a request for data 150 is received by the process 185. The request may especially come from a process 195 that is adapted to further process the requested data 150. The request may comprise an indication of a predetermined process 105, an identification of a machine or component of interest, a period of time and/or one or other conditions.

It is preferred that a step 230 is then executed in order to determine whether or not a predetermined acquisition should be considered an anomaly. It is assumed that previously received acquisitions will aggregate in at least one cluster. A cluster may be defined as several acquisitions, their quantity exceeding a predetermined number, wherein for each acquisition in the cluster there exists another acquisition in said cluster to which the distance is smaller than a predetermined value. A distance between two acquisitions may be an Euclidian distance. That is, if the parameter has only one dimension, the distance between a first and a second acquisition may simply be the difference between their values. If the parameter has two dimensions, the Euclidian distance may be determined as the length of the hypotenuse of a right triangle with one end point of said hypotenuse on each of said acquisitions. The length of the hypotenuse may then be computed from differences in corresponding first and second values of said acquisitions using the well-known Pythagorean Theorem. For higher dimensions, the Euclidian distance may be determined correspondingly.

Distance from an acquisition to a cluster may be defined as its distance to the most proximate acquisition in said cluster. Optionally it may be determined whether or not the determined distance exceeds a predetermined threshold. Also, a probability may be determined that an acquisition that lies farther than predetermined apart from said cluster is or is not an anomaly.

The result of the processing in step 230 may be stored, especially in storage 190, and/or sent to an interested party like said process 195. Especially in case of storing the result, an event informative of the provided information may be created and optionally stored in said storage 190 or sent to a predetermined party like the process 195.

The process 195 may control or configure how processing is carried out in step 230 and how event generation and notification handling is done. This is preferred to be done at a time before the processing step 230. A configuration request may be made to service 185, preferably comprising information on how processing is to be done on what data 150 at what time and how to proceed with a result. Notification may be controlled in the same way, together or independently from controlling processing 230.

The process 195 may for instance subscribe to a predetermined event or a predetermined group, kind or class of events so that the process 195 will be sent a notification every time a predetermined event occurs. In one embodiment, a first process 195 may make a notification subscription for a second process 195. The process 195 may also unsubscribe from a predetermined notification to stop notifications being sent. Notification may be limited to a predetermined period of time after configuration, e.g. 2 hours, a day or 48 hours. A subscription of a process 195 to notification may be renewable to ensure continuous operation.

In an optional step 235 a response to the request of 225 is prepared and provided. The response may especially comprise an indication whether or not there is reason to consider a predetermined acquisition an anomaly. This indication may comprise a distance of said acquisition from a cluster of acquisitions, whether the distance exceeds a predetermined distance or a probability that an acquisition with a distance exceeding said predetermined distance represents an anomaly. The requesting process 195 may then latch onto the provided data 150 and process it further. The provided indication or a result of said processing may be used to control the process 105.

It is preferred that between the process 195 and the process 185 an API is defined that allows exchange of processed or unprocessed data 150 and/or configuration information on how processing is done and/or how notifications are processed. The API is preferred to follow the Representational State Transfer (REST) paradigm. Although REST strictly does not use session states a token may be used for service access after authentication, wherein the authentication may for example be based on predetermined credentials (like username and password). Upon successful authentication the token may be generated by service 185 and provided to process 195. Subsequent requests of the process 195 may require the token to be sent back to the service 185 in order to gain access to predetermined service resources like a service function or data 150. The server 185 may maintain session variables associated to the token. The token may also contain information in plain, scrambled, hashed or encrypted form.

The service 185 may especially be realized as a web service and the process 195 may communicate with it over an application protocol like Hypertext Transfer Protocol (HTTP) or its encrypted variant HTTPS. Exchanged data 150 may be encoded in JSON.

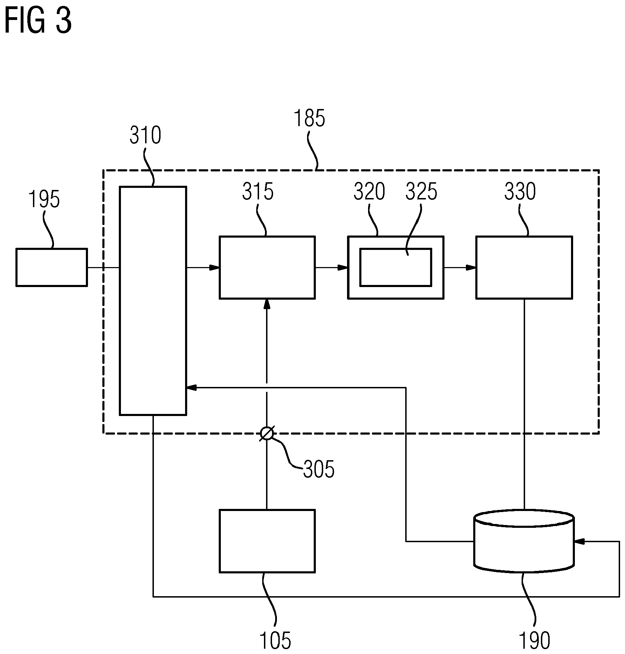

Figure 3 shows an exemplary block diagram of architecture 300 of services 185 and 195 in system 100 of Figure 1. Items displayed in Figure 3 are preferred to be implemented as functional components of service 185 where applicable.

The service 185 has a first interface 305 to the process 105 and a second interface 310 to the process 195. The second interface 310 is preferred to comprise a REST service and furthermore to support at least the POST, GET and DELETE requests. Although REST strictly does not use session states a token may be used for service access after authentication, which may be based on predetermined credentials. The token may be provided to process 195 by service 185 upon successful authentication. Subsequent requests of the process 195 may require the token to be sent to the service 185 in order to gain access to predetermined service resources like a service function or data 150. The server 185 may maintain session variables associated to the token. The token may also contain information in plain, scrambled, hashed or encrypted form. The second interface 310 is preferred to support encrypted communication like as on the basis of HTTPS. The process 195 may not require any security scope.

A reader 315 is adapted to receive acquisitions of data 150 of a parameter of process 105 and relay the acquisitions to an anomaly detector 320. The acquisitions are preferred to form a time series. In order for a predetermined process 195 to cause access of service 185 to said data 150, the process 195 may be required to possess appropriate security scope, which may be enforced through above-mentioned token. The anomaly detector 320 is preferred to be adapted to host a model 325 for anomaly detection that may be configured, for instance through process 195.

The anomaly detector 320 may be adapted to train a given model 325 in a first mode of operation such as to determine clusters and estimate parameters for cluster determination and/or scoring. In a second mode of operation an acquisition is scored to see whether or not it should be considered an anomaly. The modes are usually executed sequentially, however, in some embodiments both modes may be executed in parallel. Depending on the result of applying the model 325 to incoming acquisitions an event may be generated by the anomaly detector 320 and generated events may be forwarded to process 195 and/or stored in storage 190. Data 150 underlying said processing by anomaly detector 320 may also be stored in storage 190. An event may comprise information about, but restricted to, an identification, the identification of a token, a timestamp, a start time, an end time, an asset identification, a regressor, a regressant, a threshold and/or a serialised event.

Access to data 150 or events residing in storage 190 is preferred to be controlled such as to prevent unauthorized access. Stored information may be removed from storage 190 after a predetermined length of time, say, about an hour, a day, a week, ten days or a month. Should the storage 190 comprise a database, information for different services 195 or different users using the same process 195 may be kept in different database tables. A process 195 or an associated user may only be able to access information from an assigned database table.

Work of the anomaly detector 320 may take place in processing memory available to service 185 so that no temporary data structure must be persisted. The model 325 may also be represented in memory and get deleted when a corresponding analysis ends.

Based on the anomaly determination, a notification of an event may be generated and provided to an interested party, for instance process 195, for asynchronous operation. The notification may for instance indicate presence of a new estimation or the occurrence of an anomaly determination problem like insufficient training data. The interface 310 may be used for notification. Raw or processed data 150 from the process 105 may also be made available through said interface 310. Optionally, selected data 150 stored in storage 190 may be deleted through said interface 310. Logging of events or intermediate data may be supported. Apart from this, logging of authorization or authentication services for gaining access to service 185 may be employed.

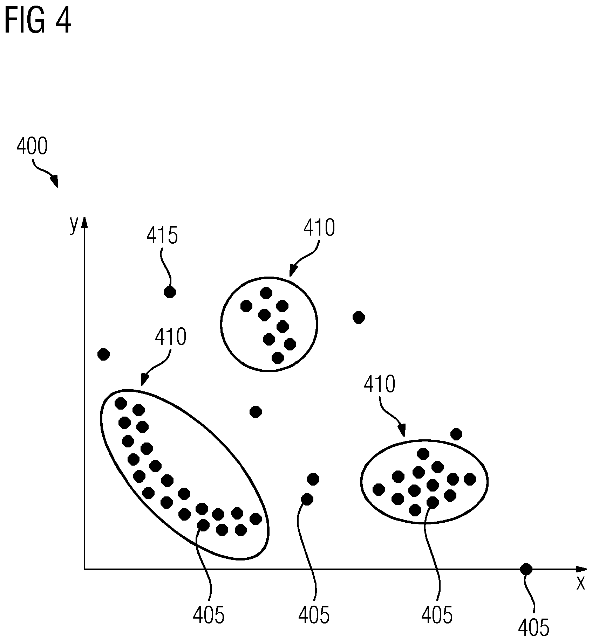

Figure 4 shows an illustration 400 with exemplary data 150. Present data 150 covers two dimensional acquisitions 405, some of which are accumulated in a cluster 410. An acquisition 405 that does not belong to any cluster 410 may be called outlier, noise or anomaly. In other embodiments the acquisitions 405 may each comprise only one dimension so that a corresponding illustration would be linear, three dimensions so that the illustration would be spatial, or even or more dimensions, making illustration difficult. Both dimensions may represent any kind of information related to above-indicated industrial process 105. In a preferred case one of said dimensions represents a time, especially the time of determining one or several values of the other dimensions.

Acquisitions 405 may fall into one of four categories of points. In the following observations, minPts and ε may be user configurable variables.

A point p may be called <u>core point</u> if at least minPts points are within a predetermined distance ε (ε is the maximum radius of the neighbourhood from p) of it (including p).

A point q is <u>directly reachable</u> from p if point q is within distance ε from point p and p must be a core point.

A point q is <u>reachable</u> from p if there is a path $p_1, ..., p_n$ with $p_1 = p$ and $p_n = q$, where each $p_{i+1}$ is directly reachable from $p_i$ (all the points on the path must be core points, with the possible exception of q).

All points <u>not reachable</u> from any other point (or any point inside a cluster 410) may be considered outliers that may represent an acquisition 405 anomaly.

Anomaly determination (cf. step 230 in above mentioned method 200 with reference to Figure 2) may be done as laid out below. The given scheme builds upon the well-known DBSCAN method.

Model Training

Inputs: set D with N acquisitions 405. The data set may be selected from a larger data set by giving appropriate limits, for instance a time range if one dimension of the parameter comprises a time.

- select M variables, M lying in a predetermined interval, like [1; 10]
- select or estimate DBSCAN parameters

  o select distance measure

  ▪ for instance one of Euclidean, Manhattan, Cheby-shev or Canberra

  o select minimal cluster 410 size minPts

  ▪ Range: [1, N], default: 2^M

  o select or estimate distance threshold

  ▪ calculate minPts-NN distance for every acquisition 405

- sort resulting distances in descending order
- determine the second deviation of the series of distances and stop when it is smaller than a predetermined value, say, 0.1
- select the distance at the stop point as threshold

- run DBSCAN using estimated parameters

Output: partition of dataset D into clusters 410 and noise (=outliers, anomalies) 415.

The generated output may be processed some more to resolve whether or not an acquisition 405 comprises an anomaly 415.

Scoring

- Determine anomalous instances by determining if a given instance belongs to a cluster 410 or not. An acquisition 405 c may be considered an anomaly if:

$$\nexists p \epsilon D: dist(c, p) \leq \varepsilon \;.\wedge.\; p \; is \; part \; of \; a \; cluster$$

- The probability of c being an anomaly may then be provided:

$$min(dist(c, p) | p \epsilon D \;.\wedge.\; dist(c, p) > \varepsilon)$$

Note that Training and Scoring may be done in successive processing phases or concurrently. Also note that available data 150 may comprise acquisitions 405 that form clusters 410 with significantly different density values. For such data above indicated processing may be difficult or even unfeasible. Presented method may have a complexity of $O(n^2)$. It is preferred that the data 150 is pre-processed or optimized for anomaly detection before running above indicated procedure. Pre-processing may comprise seasonality determination, segmentation etc. Should this not be done, an anomaly that forms a cluster 410 may distort procedure results.

**Claims**

1. Method (200) for processing data concerning an industrial process, the method (200) comprising steps of:

   - acquiring (205) a parameter related to said industrial process (105);
   - determining (230) the distance of said acquisition (405) to a cluster (410);
   - wherein the cluster (410) comprises at least a predetermined number of acquisitions (405) that are closer to each other than a predetermined distance;
   - determining (230) that said acquisition (405) represents an anomaly (415) if its distance to the cluster (410) exceeds a predetermined threshold; **characterized in that** the distance between the acquisition (405) and the cluster (410) is the shortest distance between said acquisition (405) and any acquisition (405) of the cluster (410); wherein
   - the industrial process (105) is controlled (235) on the basis of whether or not an anomaly (415) was detected.

2. Method (200) according to claim 1, wherein the distance of said acquisition (405) to the closest of a plurality of distinct clusters (410) of previous acquisitions (405) of said parameter is determined.

3. Method (200) according to claim 1 or 2, wherein said parameter has n dimensions, n > 1, and the distance between two acquisitions (405) is determined as the Euclidian distance in n-dimensional space.

4. Method (200) according to one of the previous claims, further comprising steps of

   - determining the probability that the acquisition (405) represents an anomaly (415); and
   - determining that said acquisition (405) represents an anomaly (415) if said probability exceeds a predetermined threshold.

5. Method (200) according to one of the previous claims, wherein an event is generated if an anomaly (415) is detected.

6. Method (200) according to one of the previous claims, wherein a notification is sent if an anomaly (415) is detected.

7. Method (200) according to claim 6, wherein a subscription to a notification concerning an anomaly (415) of said parameter is received.

8. Method (200) according to one of the previous claims, wherein the acquisition is stored and stored acquisitions with a storing duration that exceeds a predetermined time are deleted.

9. System (100) for processing data (150) concerning an industrial process (105), the system comprising:

- a computing platform (180);
- the computing platform (180) having a data (150) interface that is connectable, via a wide area data network, to a physical entity (160);
- wherein the physical entity (160) is adapted to provide an acquisition (405) of a parameter that is related to said process (105);
- wherein the platform (180) is adapted to carry out a method (200) according to one of the above claims.

10. System (100) according to claim 9, wherein the physical entity comprises a data acquisition unit (160) located in a domain where the process (105) is carried out, the data (150) acquisition unit (160) comprising at least one interface (175) connectable to a sensor (155) that is adapted to acquire said parameter.

**Patentansprüche**

1. Verfahren (200) zum Verarbeiten von Daten bezüglich eines Industrieprozesses, das folgende Schritte umfasst:

- Erfassen (205) eines Parameters in Bezug auf den Industrieprozess (105),
- Bestimmen (230) des Abstands der Erfassung (405) zu einem Cluster (410),
- wobei das Cluster (410) zumindest eine vorgegebene Anzahl Erfassungen (405) umfasst, die näher als einen vorgegebenen Abstand beieinander liegen,
- Bestimmen (230), dass die Erfassung (405) eine Anomalie (415) darstellt, wenn ihr Abstand zum Cluster (410) einen vorgegebenen Grenzwert überschreitet,

**dadurch gekennzeichnet, dass** es sich bei dem Abstand zwischen der Erfassung (405) und dem Cluster (410) um den kürzesten Abstand zwischen der Erfassung (405) und einer beliebigen Erfassung (405) aus dem Cluster (410) handelt, wobei

- der Industrieprozess (105) auf der Grundlage davon gesteuert (235) wird, ob eine Anomalie (415) erkannt worden ist.

2. Verfahren (200) nach Anspruch 1, wobei der Abstand der Erfassung (405) zum nächstgelegenen von mehreren separaten Clustern (410) aus früheren Erfassungen (405) des Parameters bestimmt wird.

3. Verfahren (200) nach Anspruch 1 oder 2, wobei der Parameter n Dimensionen n>1 hat und der Abstand zwischen zwei Erfassungen (405) als Euklidischer Abstand im n-dimensionalen Raum bestimmt wird.

4. Verfahren (200) nach einem der vorhergehenden Ansprüche, das ferner folgende Schritte umfasst:

- Bestimmen der Wahrscheinlichkeit, dass die Erfassung (405) eine Anomalie (415) darstellt, und
- Bestimmen, dass die Erfassung (405) eine Anomalie (415) darstellt, wenn die Wahrscheinlichkeit einen vorgegebenen Grenzwert überschreitet.

5. Verfahren (200) nach einem der vorhergehenden Ansprüche, wobei ein Ereignis erzeugt wird, wenn eine Anomalie (415) erkannt wird.

**6.** Verfahren (200) nach einem der vorhergehenden Ansprüche, wobei eine Benachrichtigung gesendet wird, wenn eine Anomalie (415) erkannt wird.

**7.** Verfahren (200) nach Anspruch 6, wobei ein Abonnement für eine Benachrichtigung bezüglich einer Anomalie (415) des Parameters empfangen wird.

**8.** Verfahren (200) nach einem der vorhergehenden Ansprüche, wobei die Erfassung gespeichert wird und gespeicherte Erfassungen mit einer Speicherdauer, die einen vorgegebenen Zeitraum überschreitet, gelöscht werden.

**9.** System (100) zum Verarbeiten von Daten (150) bezüglich eines Industrieprozesses (105), das Folgendes umfasst:

- eine Rechenplattform (180),
- wobei die Rechenplattform (180) eine Schnittstelle für Daten (150) aufweist, die über ein Wide-Area-Data-Netzwerk mit einer physischen Entität (160) verbindbar ist,
- wobei die physische Entität (160) so ausgelegt ist, dass sie für eine Erfassung (405) eines Parameters sorgt, der den Prozess (105) betrifft,
- wobei die Plattform (180) so ausgelegt ist, dass sie ein Verfahren (200) nach einem der vorhergehenden Ansprüche durchführt.

**10.** System (100) nach Anspruch 9, wobei die physische Entität eine Datenerfassungseinheit (160) umfasst, die in einer Domain angesiedelt ist, in der der Prozess (105) durchgeführt wird, wobei die Erfassungseinheit (160) für Daten (150) mindestens eine Schnittstelle (175) umfasst, die mit einem Sensor (155) verbindbar ist, der so ausgelegt ist, dass er den Parameter erfasst.

**Revendications**

**1.** Procédé (200) pour traiter des données concernant un processus industriel, le procédé (200) comprenant les étapes :

- d'acquisition (205) d'un paramètre lié audit processus industriel (105) ;
- de détermination (230) de la distance de ladite acquisition (405) à une grappe (410) ;
- dans lequel la grappe (410) comprend au moins un nombre prédéterminé d'acquisitions (405) qui sont plus proches les unes des autres qu'une distance prédéterminée ;
- de détermination (230) que ladite acquisition (405) représente une anomalie (415) si sa distance à la grappe (410) excède un seuil prédéterminé ;

**caractérisé en ce que** la distance entre l'acquisition (405) et la grappe (410) est la distance la plus courte entre ladite acquisition (405) et n'importe quelle acquisition (405) de la grappe (410) ; dans lequel

- le processus industriel (105) est commandé (235) sur la base du fait ou non qu'une anomalie (415) a été détectée.

**2.** Procédé (200) selon la revendication 1, dans lequel la distance de ladite acquisition (405) à la plus proche d'une pluralité de grappes (410) distinctes d'acquisitions (405) précédentes dudit paramètre est déterminée.

**3.** Procédé (200) selon la revendication 1 ou 2, dans lequel ledit paramètre a n dimensions, n > 1, et la distance entre deux acquisitions (405) est déterminée comme la distance euclidienne dans un espace à n dimensions.

**4.** Procédé (200) selon l'une des revendications précédentes, comprenant en outre les étapes

- de détermination de la probabilité que l'acquisition (405) représente une anomalie (415) ; et
- de détermination que ladite acquisition (405) représente une anomalie (415) si ladite probabilité excède un seuil prédéterminé.

**5.** Procédé (200) selon l'une des revendications précédentes, dans lequel un événement est généré si une anomalie (415) est détectée.

**6.** Procédé (200) selon l'une des revendications précédentes, dans lequel une notification est envoyée si une anomalie (415) est détectée.

7. Procédé (200) selon la revendication 6, dans lequel un abonnement à une notification concernant une anomalie (415) dudit paramètre est reçu.

8. Procédé (200) selon l'une des revendications précédentes, dans lequel l'acquisition est stockée et des acquisitions stockées avec une durée de stockage qui excède un temps prédéterminé sont supprimées.

9. Système (100) pour traiter des données (150) concernant un processus industriel (105), le système comprenant :

   - une plateforme informatique (180) ;
   - la plateforme informatique (180) ayant une interface de données (150) qui peut être connectée, *via* un réseau de données étendu, à une entité physique (160) ;
   - dans lequel l'entité physique (160) est adaptée pour fournir une acquisition (405) d'un paramètre qui est lié audit processus (105) ;
   - dans lequel la plateforme (180) est adaptée pour réaliser un procédé (200) selon l'une des revendications cidessus.

10. Système (100) selon la revendication 9, dans lequel l'entité physique comprend une unité d'acquisition (160) de données située dans un domaine où le processus (105) est réalisé, l'unité d'acquisition (160) de données (150) comprenant au moins une interface (175) pouvant être connectée à un capteur (155) qui est adapté pour acquérir ledit paramètre.

# FIG 1

FIG 2

FIG 3

FIG 4

**EP 3 511 788 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070143038 A
- EP 0971321 A2